**Europäisches Patentamt**

**European Patent Office**

**Office européen des brevets**

(19)

(11) Veröffentlichungsnummer: **0 240 599**
**A2**

## (12) EUROPÄISCHE PATENTANMELDUNG

(21) Anmeldenummer: **86114883.1**

(22) Anmeldetag: **27.10.86**

(51) Int. Cl.⁴: **G01L 5/00**

(30) Priorität: **24.03.86 DE 3610897**

(43) Veröffentlichungstag der Anmeldung:
**14.10.87 Patentblatt 87/42**

(84) Benannte Vertragsstaaten:
**AT BE CH DE ES FR GB GR IT LI LU NL SE**

(71) Anmelder: **Anger, Wilhelm**
**Chesa Pas-chüra**
**CH-7500 St. Moritz-Suvretta(CH)**

(72) Erfinder: **Anger, Wilhelm**
**Chesa Pas-chüra**
**CH-7500 St. Moritz-Suvretta(CH)**
Erfinder: **Leuzinger, Christoph**
**Reussblickstrasse 58**
**CH-5620 Zufikon(CH)**

(74) Vertreter: **Grams, Klaus Dieter, Dipl.-Ing. et al**
**Patentanwaltsbüro Tiedtke-Bühling-Kinne-**
**Grupe-Pellmann-Grams-Struif Bavariaring 4**
**D-8000 München 2(DE)**

(54) **Vorrichtung zur Bestimmung der Kräfte im Bereich der Kontaktflächen zwischen einer Brillenfassung und dem Kopf eines Brillenträgers.**

(57) Beschrieben wird eine Vorrichtung zur Überprüfung des einwandfreien Sitzes einer Brillenfassung am Kopf des Brillenträgers. Die Vorrichtung weist zumindest einen platten-bzw. blattförmigen Kraft-bzw. Druck-Meßfühler auf, der an einem Halter angeordnet und an die jeweiligen Kontaktflächen zwischen Fassung und Kopf bringbar ist. Mit der Vorrichtung gelingt es, die tatsächlich an den einzelnen Kontaktstellen auftretenden Kräfte und Drücke exakt und reproduzierbar zu bestimmen, indem z.B. die Fassung geringfügig angehoben, der Meßfühler an die betreffende Kontaktstelle herangeführt und die Fassung wieder abgesetzt wird. Aufgrund der geringen Bauhöhe des Kraft-Meßfühlers können nacheinander die einzelnen Kontaktbereiche zwischen Fassung und Kopf überprüft werden, ohne dadurch an der beim Tragen der Brille vorliegenden räumlichen Lagezuordnung zwischen Fassung und Kopf etwas zu ändern.

Fig. 2

**EP 0 240 599 A2**

## Vorrichtung zur Bestimmung der Kräfte im Bereich der Kontaktflächen zwischen einer Brillenfassung und dem Kopf eines Brillenträgers

Die Erfindung bezieht sich auf eine Vorrichtung gemäß dem Oberbegriff des Patentanspruchs 1.

Bei aufgesetzter Brille berührt die Brillenfassung den Kopf des Brillenträgers an mehreren Stellen, z.B. im Bereich der Nasenflanken, der Nasenwurzel und der Ohren. Sobald an einer dieser Berührungsstellen ein Druck ausgeübt wird, der einen von Brillenträger zu Brillenträger unterschiedlich hohen Schwellwert übersteigt, können beim Tragen der Brille Komplikationen auftreten, die das Wohlbefinden des Brillenträgers erheblich beeinträchtigen.

Auf der Basis dieser Erkenntnis hat man versucht, die Druckbelastung an den Kontaktflächen zwischen Brillenfassung und dem Kopf des Brillenträgers aus dem Brillengewicht und der Form der Brillenfassung zu berechnen. Diese Berechnung hat sich jedoch als ungeeignet erwiesen, da sie von idealisierten Bedingungen ausgehen muß, die in der Praxis nicht gegeben sind, so daß die Berechnungsergebnisse die speziellen Belastungsverhältnisse für den einzelnen Brillenträger nicht genau genug wiedergeben. Dabei kommt erschwerend hinzu, daß bereits diejenigen Eigenspannungen der Brillenfassung, die entstehen, wenn die Brille nicht richtig sitzt, zu einer derartigen Druckerhöhung an einer bestimmten neuralgischen Berührungszone zwischen Brillenfassung und Kopf führen kann, die der Brillenträger nach längerem Tragen der Brille als äußerst unangenehm empfindet.

Der Erfindung liegt die Aufgabe zugrunde, eine Vorrichtung zu schaffen, mit der der Sitz einer Brillenfassung am Kopf des Brillenträgers exakt kontrollierbar ist.

Diese Aufgabe wird durch die Vorrichtung gemäß Patentanspruch 1 gelöst.

Die erfindungsgemäße Vorrichtung schafft in Form des Kraft-Meßfühlers eine Kraftmeßsonde, die so ausgebildet ist, daß sie an die Kontaktstellen zwischen Brillenfassung und Kopf des Brillenträgers bringbar ist. Dies kann beispielsweise dadurch erfolgen, daß an die jeweiligen Kontaktflächen bei abgenommener Fassung die einzelnen Kraft-Meßfühler gebracht werden und anschließend die Fassung aufgesetzt wird. Eine weitere Möglichkeit der Anwendung der erfindungsgemäßen Vorrichtung besteht darin, zwischen Fassung und Kopf des Brillenträgers einen Kraft-Meßfühler bzw. mehrere Kraft-Meßfühler einzuführen und dann die Fassung wieder in die richtige aufgesetzte Lage zu bringen. Mit einer derartigen Vorrichtung können die beim Tragen der Brillenfassung auftretenden Kräfte exakt individuell bestimmt werden. Es hat sich gezeigt, daß ausreichend genau arbeitende Kraft-Meßfühler herstellbar sind, die flach genug ausgebildet sein können, damit bei eingesetztem Kraft-Meßfühler zwischen Brillenfassung und Kopf keine spürbare Veränderung der räumlichen Relativlage zwischen Brillenfassung und Kopf eintritt. Dies eröffnet die Möglichkeit, mit einer einzigen Kraftmeßsonde zu arbeiten und diese punktuell und aufeinanderfolgend an die verschiedenen Kontaktstellen zwischen Brillenfassung und Kopf heranzuführen und dort die Kräfte zu messen, ohne dadurch die beim natürlichen Tragen der Brille auftretenden Kräfte in unzulässig großem Ausmaß zu verfälschen.

Die Weiterbildung gemäß Patentanspruch 2 - schafft ein einfaches Meßgerät, das in der Ausgestaltung als Einfach-Meßsonde ein handliches Arbeitsgerät für den Augenarzt oder Optiker zur Überprüfung des Sitzes der Brillenfassung darstellt.

Um sicherzustellen, daß sich der Kraft-Meßfühler bei Ankopplung an einen Halter möglichst kräftefrei den verhältnismäßig komplex gestalteten Auflageflächen am Kopf des Brillenträgers anpassen bzw. anschmiegen kann, ist es vorteilhaft, die Vorrichtung gemäß Patentanspruch 3 weiterzubilden.

Für die Gestaltung des Kraft-Meßfühlers bleibt ein verhältnismäßig großer Spielraum. Es ist allerdings zweckmäßig, daß er sehr flach, beispielsweise in der Größenordnung von bis zu einer Dicke von 0.8 mm baut. So kann beispielsweise ein lappenähnliches Gebilde Anwendung finden, das sich an die Kontaktflächen in mehreren Richtungen anschmiegt. Eine besonders einfache und dennoch ausreichend genau arbeitende Ausgestaltung des Kraft-Meßfühlers ist Gegenstand des Patentanspruchs 4. Um eine definierte Belastungsrichtung des Kraft-Meßfühlers bereitzustellen, ist es vorteilhaft, diesen mit einer definierten Meß-Auflagefläche auszugestalten. Diese Meß-Auflagefläche kann nicht nur der Lage, sondern auch der Größe nach gezielt festgelegt werden, um dadurch die Meßstelle exakt und reproduzierbar zu definieren und eine Aussage über die Druckbelastung zu erhalten.

Wie oben bereits erwähnt, sind die Kontaktflächen zwischen Brillenfassung und Kopf des Brillenträgers nicht nur unterschiedlich räumlich angeordnet, sondern darüber hinaus auch von der Geometrie her unterschiedlich ausgebildet. So sind beispielsweise im Bereich der Nasenflanken nahezu ebene Auflageflächen vorhanden, wohingegen im Bereich der Nasenwurzel und im Bereich des Ohransatzes am Schädel eine Paarung zwischen zwei Flächen vorliegt, die jeweils in zwei Ebenen gekrümmt sind. Um auch an diesen Stellen, die darüber hinaus manchmal schwer zugänglich sind, reproduzierbare und exakte Messungen vornehmen zu können, ist es vorteilhaft, den Kraft-Meßfühler gemäß Patentanspruch 6 auszubilden, wenn er an einem Halter angebracht ist. Diese Ausbildung kann gleichzeitig dazu herangezogen werden, das Einführen des Kraft-Meßfühlers in den Kontaktbereich an der jeweiligen Meßstelle zu erleichtern.

Meßfühler mit den oben erwähnten Kriterien hinsichtlich geringer Bauhöhe und ausreichend großem Auflösungsvermögen zur Messung von Kräften im Bereich zwischen etwa 1 bis 100 mN können auf der Basis verschie dener physikalischer Effekte arbeiten. Eine vorteilhafte Möglichkeit ist Gegenstand des Patentanspruchs 6. Der mechanische Teil des Druck-Meßfühlers wird hierbei bevorzugter Weise von einem Tastzungen-Paar gebildet, die als Wegaufnehmer im Bereich der zu beurteilenden Meßstelle fungieren. Auf diese Weise kann die Länge, die ohnehin dazu benötigt wird, um am Druck-Meßfühler eine feine und ggf. schmale Spitze auszubilden, dazu herangezogen werden, eine geeignete Weg-und/oder Kraft-Übersetzung bereitzustellen, die dann als Eingangsgröße für den elektrisch arbeitenden Meßwert-Signalumformer herangezogen werden kann.

Wenn als Meßwert-Signalumformer ein Dehnungsmeßstreifen verwendet wird, ist die Ausbildung gemäß Patentanspruch 11 von besonderem Vorteil, da auf diese Weise die definierte Biegestelle unabhängig von der Gestaltung der Tastzungen optimiert werden kann. Ein weiterer Vorteil dieser Ausgestaltung liegt darin, daß der Meßwert-Signalumformer an einer Stelle angebracht werden kann, die sich in verhältnismäßig großer Entfernung vom eigentlichen Meßpunkt befindet, so daß er vor äusseren Einflüssen weitestgehend geschützt ist.

Eine vorteilhafte Ausgestaltung der Biegestelle ist Gegenstand des Patentanspruchs 12.

Wenn der Meßfühler gemäß Patentanspruch 13 ausgebildet ist, ergibt sich eine einfache und robuste Konstruktion. Die fest mit dem Meßfühler-Kopf und dem mit der Biegestelle ausgestatteten Element verbundene Tastzunge ist jedoch bei dieser Ausgestaltung nicht als Weg-Aufnehmerelement heranzuziehen, so daß sich bei extrem kleinen zu messenden Kräften Meßverfälschungen dadurch ergeben können, daß der Meßfühler mit dieser festen Tastzunge mit unterschiedlich großer Kraft auf die Kontaktfläche gedrückt wird.

Die Weiterbildung gemäß Patentanspruch 14 ist in der Lage, derartige Meßverfälschungen zu eliminieren.

Mit der Weiterbildung gemäß Patentanspruch 15 gelingt es, die sehr dünn ausgebildete Tastzunge vor kritischen seitlichen Belastungen zu schützen. Zur Verbesserung dieser Schutzwirkung kann vorgesehen sein, daß die Außenfläche der beweglichen Tastzunge konvex bzw. ballig ausgeführt wird, so daß der Meßfühler problemlos zwischen Brillenfassung und Kopf des Brillenträgers geschoben werden kann, ohne hierdurch die Meß-Tastzunge zu beschädigen.

Anstelle der Messung mittels eines Dehnungsmeßstreifens kann auch ein Piezoelement Anwendung finden, das eine der darauf einwirkenden Kraft im wesentlichen proportionale Spannung abgibt. Dieses Piezoelement wird im wesentlichen an derselben Stelle angebracht, wie das mit der Soll-Biegestelle ausgestattete Element gemäß der Weiterbildung nach Patentanspruch 11 ff.

Eine ebenfalls vom vorrichtungstechnischen Aufwand her sehr einfache Weiterbildung ergibt sich dann, wenn der Kraft-Meßfühler pneumatisch arbeitet. Besonders vorteilhaft ist bei dieser Variante die Weiterbildung gemäß Patentanspruch 17. Diese Variante hat den Vorteil, daß die Meßfühlerspitze in der Ausgestaltung als geschlossenes Hohlprofil stabiler ausgebildet sein kann. Bei dieser Variante ist ebenfalls bezüglich der Gestaltung der Meßfühler-Spitze ein großer Freiraum eröffnet, so daß alle Kontaktstellen zwischen Brillenfassung und Kopf des Brillenträgers optimal durch geeignete Wahl der Meßfühlerspitze überprüft werden können. Bei dieser Ausgestaltung kann die Kunststoffblase selbst mit ihrem aus dem Meßfühlerkopf vorstehenden Abschnitt den Meßpunkt definieren. Es ist jedoch auch möglich, daß dieser Abschnitt der Kunststoffblase ein gesondertes Element trägt, das zur Ausbildung des definierten Meßpunkts dient, der ggf. mit einer vorbestimmten Fläche versehen sein kann.

Wenn die Kunststoffblase gemäß Patentanspruch 18 von beiden Oberflächen des Meßfühlerkopfs vorsteht, kann die Meßgenauigkeit der Vorrichtung angehoben werden. Die Spitze des Meßfühlerkopfs kann auf diese Weise kontrolliert im Bereich der Kontaktfläche aufgesetzt werden, indem der vom Arzt bzw. vom Optiker aufgebrachte Anpreßdruck ständig überwacht wird.

Wenn der Drucksensor gemäß Patentanspruch 20 ein elektrisches Signal abgibt, eröffnet sich die Möglichkeit einer trägheitsarmen und exakten Signalverarbeitung bzw. -auswertung.

Der Kraftmeßfühler kann auch rein nach dem piezoelektrischen Prinzip arbeiten. In diesem Falle ergeben sich bezüglich der Gestaltung des Meßfühlerkopfes die gleichen Vorteile, wie sie oben im Zusammenhang mit dem pneumatischen Wegaufnehmer beschrieben worden sind. Diese Meßmethode hat den Vorteil, daß sich das Piezo-Kristallelement unter Krafteinwirkung nicht spürbar bzw. sichtbar verformt. Die Dicke der Meßfühler spitze kann auf diese Weise im Verhältnis zu den vorstehend beschriebenen Lösungsvarianten um das maximale Wegaufnahme-Maß reduziert werden.

Die Verwendung des piezoelektrischen Effekts bei der Kraftmessung hat darüber hinaus den Vorteil, daß das Piezoelement verhältnismäßig einfach in der Meßfühlerkopf-Spitze fixiert werden kann, da keine spürbaren Verformungen des Meßwert-Aufnehmers zu berücksichtigen sind. Insbesondere ist bei dieser Variante mit einfachen Maßnahmen dafür zu sorgen, daß der Piezo-Kristall sowohl von der einen, der Brillenfassung zugewandten Seite, als auch von der anderen, der Kopfoberfläche zugewandten Seite des Meßfühlerkopfs vorsteht. Dadurch kann der die erfindungsgemäße Vorrichtung handhabende Arzt bzw. Optiker beim Ansetzen der Druckmeßsonde zuverlässig kontrollieren, ob er den Meßfühler ungewollt mit einer zu großen Andruckkraft an die Meßstelle heranführt.

Mit der Weiterbildung gemäß Patentanspruch 24 gelingt es, die Kraftverhältnisse selbst an den Stellen, an denen die Kontaktflächen zwischen Brillenfassung und Kopf des Brillenträgers sehr komplex gestaltet sind, aussagekräftig zu bestimmen.

Die vorstehend diskutierten Lösungsvarianten haben sämtlich gemeinsam, daß ein Kraft-bzw. Wegaufnehmer in einen gehäuseähnlich ausgebildeten Meßfühlerkopf aufgenommen sind. Um sicherzustellen, daß der Kraft-bzw. Wegnehmer beim Meßvorgang frei von äußeren Zwangskräften ist, die beispielsweise vom Halter bzw. der Halterung eingeleitet werden könnten, ist es vorteilhaft, wenn zwischen Meßfühlerkopf und Halter bzw. Halterung ein Gelenk mit vorzugsweise mehreren Freiheitsgraden eingegliedert ist, so daß sich der Kraft-oder Wegaufnehmer mit seiner Sensibilisierungsrichtung normal zu den jeweiligen Kontaktflächen ausrichten kann.

Bei der Weiterbildung gemäß Patentanspruch 26 ist dieser zusätzliche vorrichtungstechnische Aufwand nicht mehr erforderlich, da bei einer Messung unter Zugrundelegung dieser physikalischen Effekte als Träger des Kraftaufnehmers eine flexible Folie, wie z.B. eine Kunststoffolie, Anwendung finden kann, die die vorstehend beschriebene Gelenkwirkung zwischen Kraftaufnehmer und Halter aus sich heraus besitzt. Dabei ist es besonders vorteilhaft, mit einem Sandwich-Aufbau der Folie zu arbeiten, wobei die beiden Deckfolien die Signalgeber zusammen mit den elektrischen Anschlüssen tragen. Eine dazwischenliegende Schicht fungiert als eine sich den Kontaktoberflächen optimal anpassende Stabilisierungsmatrix, die die räumliche Lagezuordnung der Signalgeber gerichtet in Abhängigkeit von den auf die Folie einwirkenden Normalkräften zuläßt und bestimmt. Dabei kann auch bei dieser Ausgestaltung dafür Sorge getragen werden, daß der Kraft-Meßfühler nur auf einer ganz bestimmten und größenmäßig definierten Fläche zur Erfassung von Kräften sensibilisiert ist, wodurch reproduzierbar genau der Meßpunkt festlegbar und die gemessene Kraft in eine Druckgröße umrechenbar ist. Eine derartige Sandwich-Folie kann selbst bei Integrierung der im Patentanspruch 27 genannten Signalgeber extrem dünn ausgebildet werden, so daß der Sitz der Brille durch Einführung der Folie an einer Kontaktstelle zwischen Fassung und Kopf des Brillenträgers nicht spürbar beeinflußt wird.

Wenn die Folie an definierten Stellen Erhebungen zur Festlegung des Meßpunkts aufweist, kann die Meßstelle noch genauer festgelegt und das Belastungsprofil über gewisse größere Kontaktstrecken noch genauer bestimmt werden.

Die dazwischenliegende Schicht ist vorteilhafterweise von einer weichen Kunststoff-Einlage gebildet, die sich unter Belastung zusammendrücken läßt. Dabei genügen bei Verwendung der vorstehend erwähnten Signalgeber bereits geringste Verformungen der weichen Kunststoffeinlage, um eine ausreichend große Auflösung der Kraftmessung sicherzustellen. Insbesondere bei Anwendung des kapazitiven Prinzips kommt der Meßgenauigkeit der Vorrichtung die sehr geringe Dicke der Folie entgegen, da das Auflösungsvermögen eines kapazitiv arbeitenden Weg-Meßsystems immer größer wird, je näher die Kondensatorelemente aneinander rücken.

Bedingt durch die sehr flache Bauweise des Kraft-Meßfühlers kann die Überprüfung des Sitzes einer Brillenfassung unter Zuhilfenahme einer Einfachsonde erfolgen, die sequentiell an die verschiedenen Kontaktbereiche zwischen Brillenfassung und Kopf des Brillenträgers herangeführt wird, wobei die einzelnen Meßwerte entweder in ein Protokoll eingetragen werden oder in einem Speicher abgespeichert werden. Es ist jedoch auch möglich, die Überprüfung durchzuführen, indem eine Mehrfachsonde gemäß Patentanspruch 31 an die verschiedenen Kontaktstellen herangebracht wird.

Mit einer derartigen Mehrfachsonde kann beispielsweise gleichzeitig der gesamte Kontaktbereich zwischen Fassungssteg und Nase auf optimalen Sitz überprüft werden. Durch die Ausrichtbarkeit der Meßfühler-Köpfe kann bereits eine Grob-Justierung erfolgen, um bei einem ggf. vorgesehenen automatischen Vorschub des Sammelhalters die oben bereits angesprochenen Zwangskräfte von vornherein auszuschließen.

Ebenso wie die Einfachsonde, bei der der Meßfühler-Kopf an einem Handgriff befestigt ist, ist auch bei der Mehrfachsonde ggf. durch eine Gelenkeinrichtung dafür Sorge zu tragen, daß sich die einzelenen Meßfühler zwängungsfrei senkrecht zur Kontaktflächen-Normalen zwischen Brillenfassung und Kopf-Auflagefläche ausrichten. Dies geschieht am besten durch ein räumliches Gelenk, beispielsweise ein Kardangelenk. Um den Meßfühler dennoch sicher handhaben zu können, ist es vorteilhaft, die Gelenkeinrichtung mit Federeinrichtungen zumindest dann zu stabilisieren, wenn der Meßfühler an die Meßstelle herangeführt wird. Die Weiterbildung gemäß Patentanspruch 34 führt dann zu dem Vorteil, daß die Federstabilisierung im Zeitpunkt des Messens den Meßwert nicht mehr verfälschen kann.

Um sich bei sequentieller Untersuchung verschiedener Abstützpunkte zwischen Brillenfassung und Kopf des Brillenträgers abschließend ein Gesamtbild vom Sitz der Brillenfassung machen zu können, ist die Weiterbildung der Vorrichtung gemäß Patentanspruch 36 von besonderem Vorteil. Über die Anzeigevorrichtung sind sämtliche hintereinander gemessene Belastungswerte im Zusammenhang sichtbar zu machen, so daß dem Arzt bzw. Optiker trotz punktueller Messungen ein übergeordnetes Gesamtbild vom Sitz der Brillenfassung vermittelt werden kann.

Weitere vorteilhafte Ausgestaltungen sind Gegenstand der übrigen Unteransprüche.

Nachstehend werden anhand schematischer Zeichnungen mehrere Ausführungsbeispiele der Erfindung näher erläutert. Es zeigen:

Fig. 1 eine perspektivische schematische Ansicht einer Brillen fassung zur Verdeutlichung der hauptsächlichen kritischen Kontaktpunkte zwischen Brillenfassung und Kopf des Brillenträgers,

Fig. 2 eine perspektivische Ansicht einer ersten Ausführungsform der erfindungsgemäßen Vorrichtung zur Bestimmung der Kräfte im Bereich der Kontaktflächen zwischen Brillenfassung und Kopf in der Ausführung als manuell zu handhabende Einfachsonde,

Fig. 3 eine im vergrößerten Maßstab gezeigte Schnittansicht des Meßfühler-Kopfs der Vorrichtung gemäß Fig. 2, bei einer Schnittführung entlang der Linie III-III in Fig. 2,

Fig. 4 eine schematische Teil-Schnittansicht einer weiteren Ausführungsform der Einfachsonde,

Fig. 5 in einer der Fig. 4 ähnlichen Ansicht eine weitere Ausführungsform der Einfachsonde,

Fig. 6 eine im vergrößerten Maßstahb gezeigte perspektivische Ansicht des vorderen Bereichs der in Fig. 5 dargestellten Sonde,

Fig. 7 einen Längsschnitt durch die Spitze des bei der Ausführungsform gemäß Fig. 5 und 6 verwendeten Meßfühlers,

Fig. 8 in einer der Fig. 5 ähnlichen Darstellung eine weitere Ausführungsform der Einfachsonde,

Fig. 9 in einer der Fig. 8 entsprechenden Ansicht eine der Fig. 2 entsprechenden Ausführungsform der Einfachsonde, wobei jedoch Einzelheiten des Wegaufnehmers gezeigt sind,

Fig. 10 im vergrößerten Maßstab eine Draufsicht auf einen Dehnungsmeßstreifen, der bei der Ausführungsform gemäß Fig. 9 Anwendung findet,

Fig. 11 eine Seitenansicht des in Fig. 10 gezeigten Dehnungsmeßstreifens,

Fig. 12 einen Längsschnitt durch die Spitze des Meßfühlers der Ausführungsform gemäß Fig. 9, bei abgenommenem Meßfühler-Kopf-Gehäuse,

Fig. 13 eine Draufsicht der Meßfühler-Spitze gemäß Fig. 12,

Fig 14. eine Schnittansicht des Meßfühler-Kopfes für die Ausführungsform gemäß Fig. 9,

Fig. 15 eine schematische Darstellung einer Gelenkeinrichtung zwischen Meßfühler-Kopf und Halter,

Fig. 16 eine Ansicht des in Fig. 15 gezeigten Meßfühler-Ausschnitts von oben,

Fig. 17 eine Ansicht einer Meßfühler-Spitze, die zur Messung der Kontaktfläche zwischen Brillenfassung und Kopf im Bereich des Ohransatzes Anwendung findet,

Fig. 18 eine im vergrößerten Maßstab gezeigte Ansicht der Einzelheit XVIII in Fig. 17,

Fig. 19 eine perspektivische Ansicht einer weiteren Ausführungsform des Meßfühlers mit einer abgewandelten Gestaltung der Meßfühler-Spitze,

Fig. 20 in einer der Fig. 20 entsprechenden Ansicht eine schematisierte Darstellung einer weiteren Ausführungsform des Meßfühlers,

Fig. 21 einen Längsschnitt durch eine weitere Ausführungsform des Meßfühlers,

Fig. 22 und 23 perspektivische Ansichten von Brillenfassungsteilen zur Verdeutlichung der Möglichkeiten der Sitzüberprüfung mittels der erfindungsgemäßen Druckmeßsonde,

Fig. 24 eine schematische Darstellung einer Mehrfachsonde,

Fig. 25 eine perspektivische Ansicht der Gesamtvorrichtung zur Bestimmung der Kontaktkräfte zwischen Brillenfassung und Kopf des Brillenträgers, und

Fig. 26 ein Blockschaltbild zur Verdeutlichung der Meßsignalverarbeitung in der Vorrichtung.

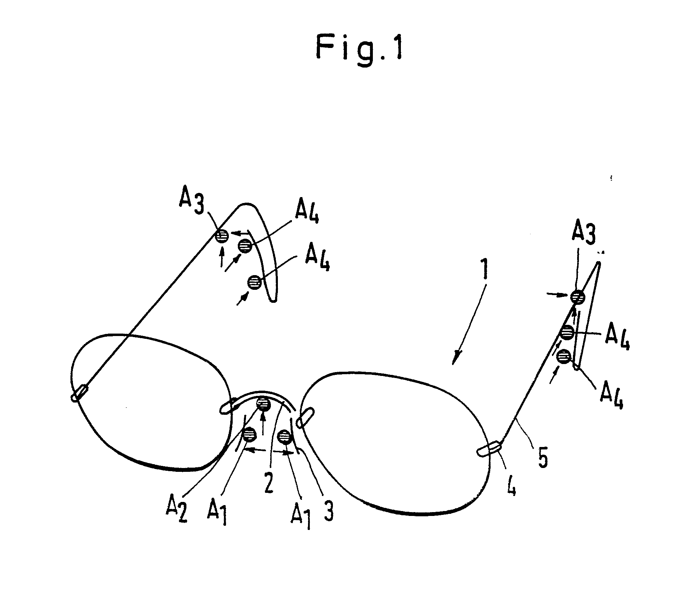

In Fig. 1 ist mit dem Bezugszeichen 1 eine Brillenfassung bezeichnet, die eine Brücke 2, zwei Stege 3, zwei Backen 4 und zwei Bügel 5 aufweist. Die schwarzen Pukte A kennzeichnen schematisch die für den Tragekomfort der Brille entscheidenden Kontaktflächen zwischen der Brillenfassung 1 und dem nicht näher dargestellten Kopf des Bril-

lenträgers. Mit $A_1$ sind die Kontaktflächen im Bereich der Nasenflanken, mit $A_2$ die Kontaktfläche im Bereich des Nasensattels, mit $A_3$ die Kontaktbereiche zwischen Bügel 5 und dem oberen Bereich des Ohransatzes und mit $A_4$ diejenigen Kontaktstellen bezeichnet, die sich hinter dem Ohr in der sogenannten Kulle des Ohransatzes befinden.

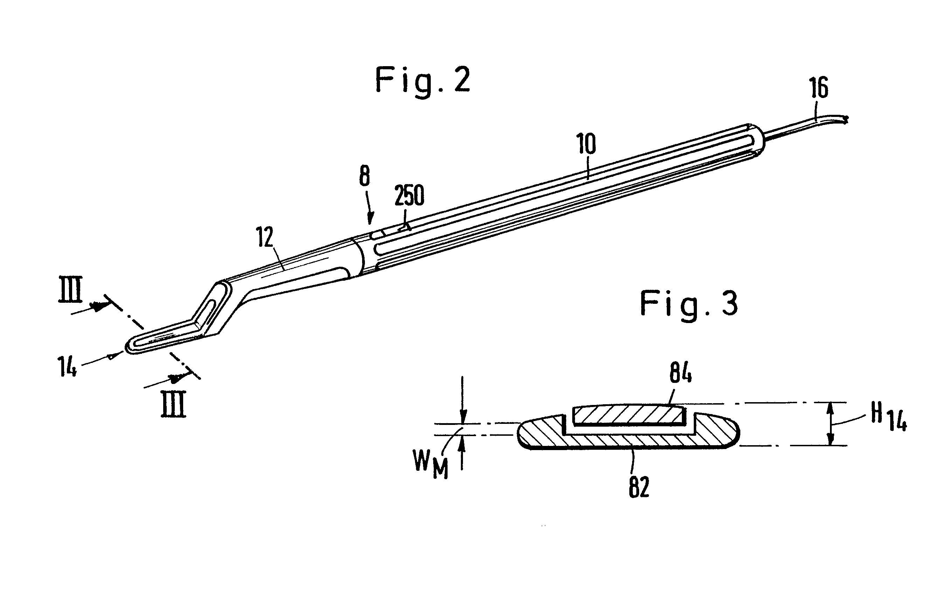

Bei richtigem Sitz der Brillenfassung am Kopf sind die Kontaktkräfte im Bereich der Kontaktflächen A so gehalten, daß die Kräfteverteilung einigermaßen symmetrisch vorliegt, d.h. keine Kontaktkraft-Spitzen an irgendeiner Kontaktfläche auftreten. Zur Überprüfung eines exakten Sitzes der Brille dient die im folgenden anhand der Fig. 2 bis 25 näher zu beschreibende Vorrichtung, mit der die Kräfte im Bereich der Kontaktflächen zwischen der Brillenfassung 1 und dem Kopf des Brillenträgers exakt und reproduzierbar gemessen werden können.

Die in Fig. 3 gezeigte Vorrichtung stellt eine Meßsonde 8 dar, die im wesentlichen aus drei Teilen besteht. Ein griffelartiger Halter 10 trägt an seinem vorderen Ende einen Druck-bzw. Kraft-Meßfühler 12, der zumindest im Bereich der Spitze platten-bzw. blattförmig ausgebildet ist, damit er mit seiner Meßfühlerspitze 14 an den jeweiligen Kontaktflächen A angeordnet werden kann, ohne hierdurch am Sitz der Brillenfassung, d.h. an der räumlichen Lagezuordnung zwischen Brillenfassung und Kopf des Brillenträgers etwas zu ändern. Zu diesem Zweck ist die Meßfühlerspitze 14 extrem flach ausgebildet, was beispielsweise aus der Schnittdarstellung gemäß Fig. 3 hervorgeht. Die Höhe $H_{14}$ liegt etwa in der Größenordnung von 0.6 bis 0.8 mm, so daß beispielsweise durch Unterschieben des Meßfühlers 12 unter die Brillenfassung keine spürbare Beeinträchtigung der Abstützungsverhältnisse an den anderen Kontaktflächen hervorgerufen wird.

Die Meßfühlerspitze 14 der Ausführungsform gemäß Fig. 2 ist zungenartig ausgebildet, um mit dem Meßfühler alle entscheidenden Kontaktflächen A zwischen Brillenfassung und Kopf des Brillenträgers erreichen zu können. Um die Verschiebbarkeit des Meßfühlers 12 zwischen Hautoberfläche und Brillenfassung zu erleichtern, sind die Bestandteile der Meßfühler-Spitze abgerundet, so daß kein Verkanten oder Verhaken der Meßfühlerspitze auftreten kann. Der dritte Teil der Meßsonde 8 wird von einem Signal-Umformer mit zugehöriger Signal-Verarbeitungseinrichtung gebildet, von der in Fig. 2 lediglich die elektrischen Anschlüsse 16 erkennbar sind.

Über den Signal-Umformer erfolgt die Umwandlung eines der Kraft im Kontaktflächenbereich A entsprechenden Signals in ein elektrisches Signal, das dann - wie später noch näher zu erläutern sein wird - in geeigneter Weise verarbeitet wird.

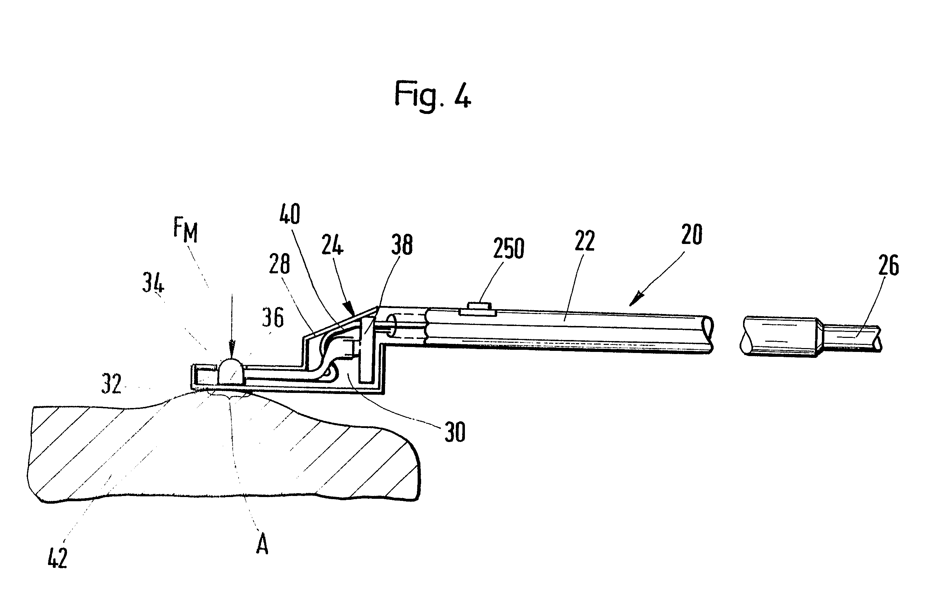

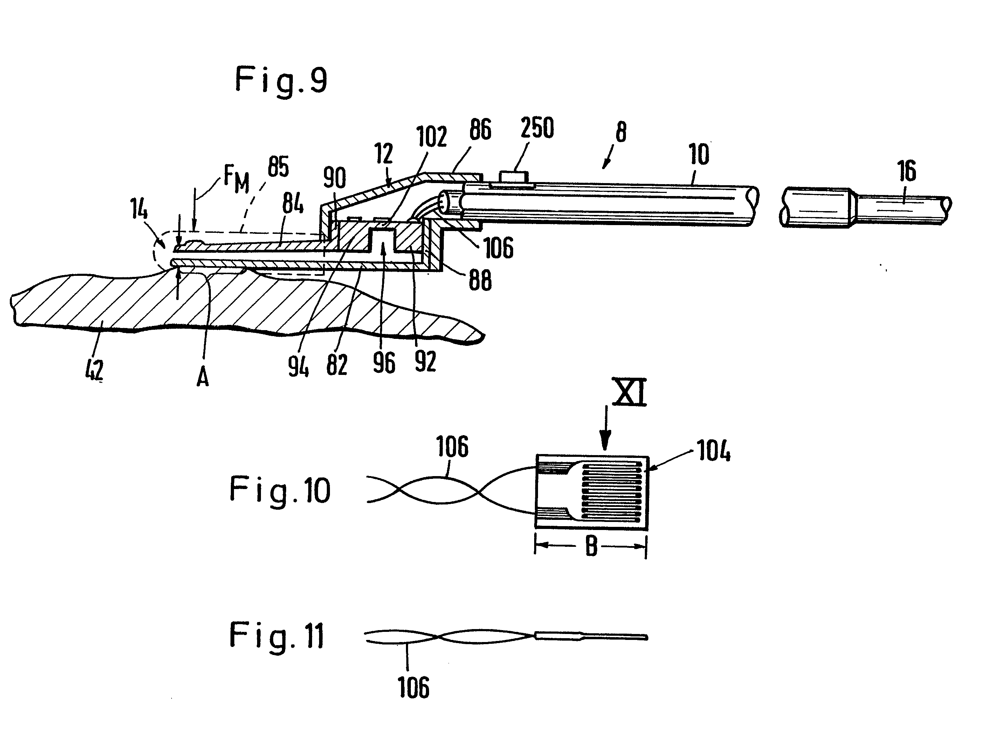

Diese Umwandlung erfolgt bei der Ausführungsform gemäß Fig. 2 und 3 dadurch, daß ein der Kraft proportionaler Weg direkt abgegriffen wird und dieser Weg dann ggf. über eine Übersetzung in ein dazu proportionales elektrisches Signal umgewandelt wird. Der maximale Meßweg ist in Fig. 3 mit $W_M$ bezeichnet, der in der Größenordnung von 0.1 mm liegt. Der Aufbau eines derartigen Kraft-Meßfühlers soll später anhand der Fig. 9 ff. im einzelnen erläutert werden. Es ist jedoch hervorzuheben, daß die Durchführung der Messung nicht auf dieses elektromechanische Prinzip beschränkt ist. Vielmehr ist es möglich, den Kraft-Meßfühler 12 auf der Basis weiterer physikalischer Effekte zu betreiben, was nachfolgend anhand der Ausführungsformen gemäß Fig. 4 bis 8 erläutert werden soll.

Fig. 4 zeigt eine Meßsonde 20, die ebenso wie die Meßsonde 8 als Einfach-Meßsonde ausgebildet ist und ebenfalls einen Halter 22 und einen eigentlichen Kraft-Meßfühler 24 besitzt. Mit der Bezugsnummer 26 ist ein Anschlußkabel bezeichnet, das zu einer nicht näher dargestellten Signalverarbeitungseinrichtung führt. Bei dieser Ausführungsform trägt der Halter 22 einen in Form eines Hohlgehäuses ausgeführten Meßfühler-Kopf 28, der einen hinteren Abschnitt 30 und einen Spitzenabschnitt 32 aufweist, der im wesentlichen so dimensioniert ist, wie die Meßfühlerspitze gemäß Fig. 2 und 3. Im Spitzenabschnitt 32 des Meßfühlers ist eine Ausnehmung 34 mit bevorzugterweise genau festgelegter Geometrie vorgesehen, durch die hindurch sich die Ausnehmung 34 ausfüllend eine Kunststoffblase 36 erstreckt, die mit Druckgas gefüllt und an einem Drucksensor 38 angeschlossen ist. Über eine Druckleitung 40 erfolgt eine automatische Druckregulierung in der Kunststoffblase. Die Meßsonde 20 funktioniert derart, daß die Druckdifferenz, die bei der Belastung der Blase 36 durch die Meßkraft $F_M$ entsteht, im Gasdrucksensor 38 gemessen, dort in ein elektrisches Signal umgewandelt und schließlich elektrisch ausgewertet wird.

Abweichend von der in Fig. 4 gezeigten Ausführungsform kann auch eine weitere Ausnehmung für die Kunststoffblase 36 auf der der Kontaktfläche A zugewandten Seite des Meßfühler-Kopfs 28 vorgesehen sein, so daß von der Kunststoffblase 36 ausschließlich die Normalkräfte erfaßt werden, die durch die Abstützung der Brillenfassung am Körper 42 hervorgerufen werden. Eine mehr oder weniger große Anfangs-Andruckkraft, mit der der Meßfühler-Kopf 28 von der Bedienungsperson der Meßsonde gegen die Oberfläche des Körpers 42 gedrückt wird, kann dabei das Meßergebnis nicht mehr verfäl schen. Dies ist insbesondere deshalb von Bedeutung, weil sich die zu messenden Kräfte in der Größenordnung von 1 bis 100 mN bewegen.

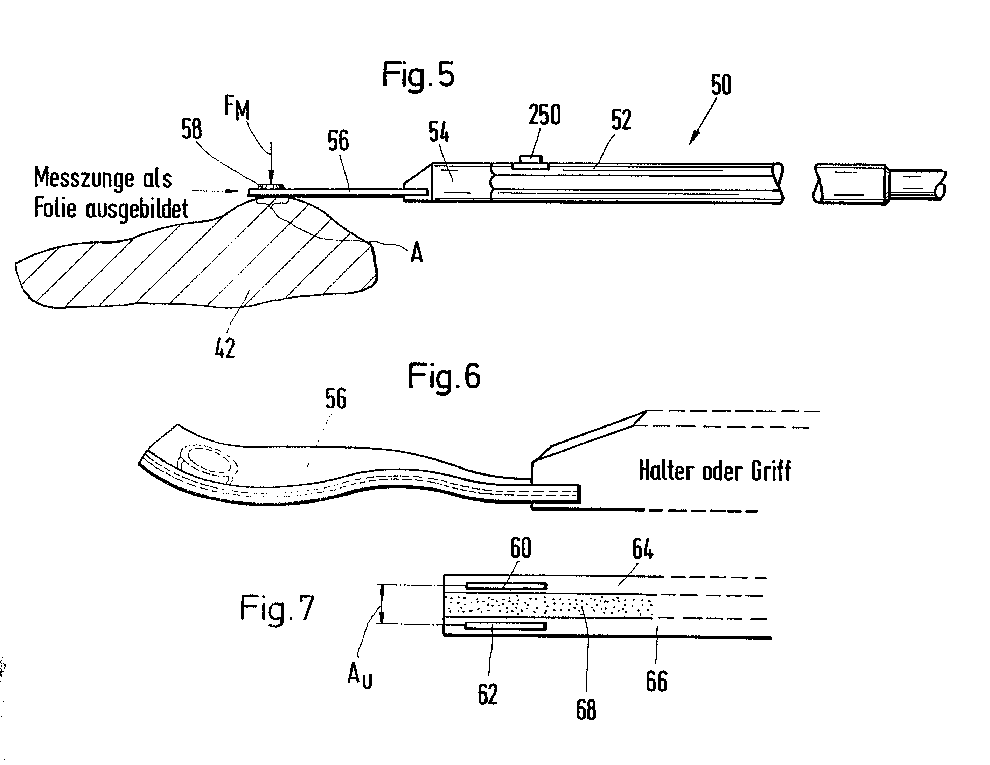

In den Fig. 5 bis 7 ist eine weitere Ausführungsform der erfindungsgemäßen Vorrichtung gezeigt. Die Meßsonde gemäß Fig. 5 ist mit 50 bezeichnet und sie besitzt wiederum einen Halter 52, der als Griff ausgebildet sein kann. Ferner ist ein Meßfühler-Kopf 54 vorgesehen, der im Vergleich zu den vorstehend beschriebenen Ausführungsformen etwas vereinfacht ausgebildet ist. Der Meßfühler-Kopf 54 trägt eine folienartige Meßzunge 56, die als flexibler Meßlappen ausgebildet sein kann, der sich der Kontaktfläche A zwischen Körper 42 und nicht dargestellter Brillenfassung anschmiegen kann. Im vorderen Bereich der Meßzunge 56 ist eine definierte Erhebung 58 vorgesehen, die bevorzugterweise eine definierte Fläche vorbestimmten Flächeninhalts besitzt. Unterhalb dieser Fläche 58 sind Signalumformer in Form von Spulen-, Kondensatorplatten-bzw. Hall-Elementen-Paaren vorgesehen, die in einen elektrischen Schaltkreis derart eingegliedert sind, daß bei Veränderung des Abstandes der Signalumformer zueinander ein dem entsprechendes Signal erzeugt wird. Dies soll im folgenden näher anhand eines kapazitiv arbeitenden Signalumformers verdeutlicht werden. Dieser Signalumformer weist gemäß Fig. 6 und 7 zwei Kondensatorplatten 60 und 62 auf, die bei unbelasteter Meßzunge 56 in einem Abstand $A_U$ zueinander stehen. Die Kondensatorplatten sind jeweils in einer Randschicht 64 bzw. 66 eingebettet, in der auch die Stromversorgung für die Kondensatorplatten vorgesehen ist. Zwischen den Randschichten 64 und 66 ist eine Zwischenschicht 68 vorgesehen, die aus weichem Kunststoff besteht, der sich unter Belastung zusammendrücken läßt. Wenn somit die Meßkraft $F_M$ auf die Meßzunge im Bereich der Kondensatorplatten 60 und 62 einwirkt, verringert sich der Abstand zwischen den Kondensatorplatten, wodurch der Schaltkreis, in dem die Kondensatorplatten integriert sind, ein der Kraft entsprechendes Signal erzeugt, das anschließlich ausgewertet wird. In gleicher Weise arbeitet eine derartige Meßsonde dann, wenn anstatt der Kondensatorplatten Spulenelemente bzw. Hall-Elemente verwendet werden. Der besondere Vorteil dieser Ausführungsform liegt darin, daß die Meßzunge 56 im Kontaktflächenbereich A durch die Biegeweichheit der Folie kräftefrei eingelegt werden kann, so daß durch die Handhabung der Meßsonde 50 keine Verfälschungen des Meßergebnisses hervorgerufen werden können.

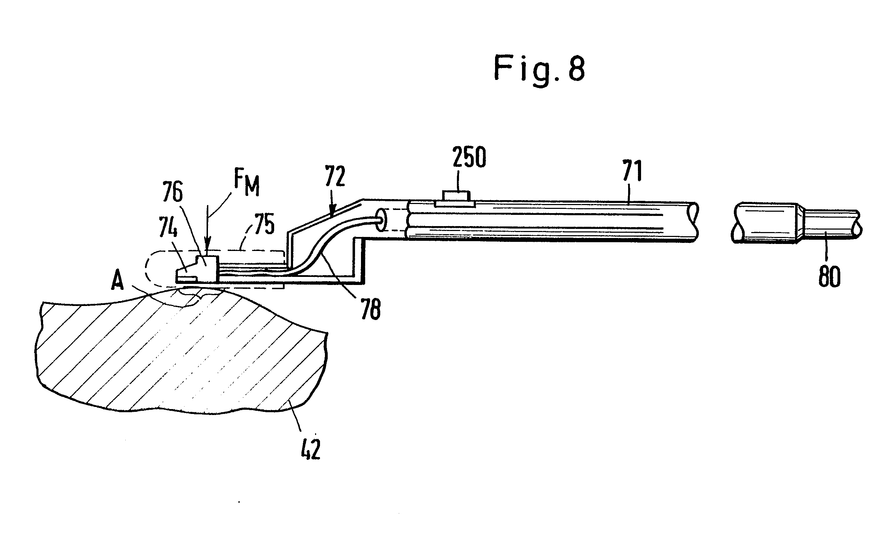

Eine weitere Ausführungsform der Vorrichtung ist in Fig. 8 gezeigt. Diese Meßsonde ist mit dem Bezugszeichen 70 gekennzeichnet, und sie arbeitet nach dem Prinzip des Piezoeffektes. Bei dieser Ausführungsform trägt ein Halter 71 einen dem Meßfühlerkopf gemäß Fig. 4 im wesentlichen entsprechenden Meßfühlerkopf 72, in dessen Spitzenabschnitt 74 ein Piezoelement 76 angeordnet ist, das über eine Leitung 78 und ein Anschlußkabel 80 an eine nicht gezeigte Auswerteschaltung angeschlossen ist. Das Piezoelement 76 erstreckt sich durch eine nicht näher bezeichnete Ausnehmung im Spitzenabschnitt 74, so daß es von der Meßkraft $F_M$ bevorzugterweise auf einer definierten Meßoberfläche belastet wird. Durch die mechanische Belastung des Piezoelements 76 wird eine der Belastung nach einer bestimmten Gesetzmäßigkeit folgende Spannung erzeugt, die dann verstärkt und ausgewertet werden kann.

Auch bei dieser Ausführungsform kann es vorteilhaft sein, eine weitere Ausnehmung im Spitzenabschnitt 74 auf der der Kontaktfläche A zugewandten Seite für das Piezoelement 76 vorzusehen, um Meßwertverfälschungen zu minimieren.

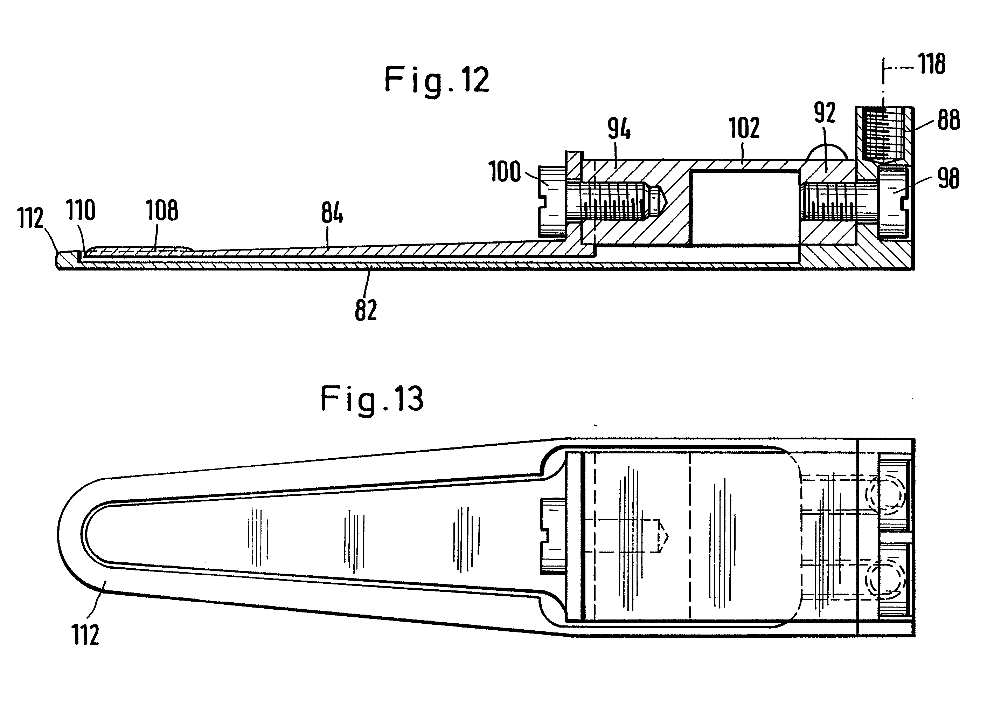

Anhand der Fig. 9 bis 14 soll im folgenden die nach dem elektromechanischen Signal-Umformprinzip arbeitende Meßsonde 8 beschrieben werden, die schematisch bereits in Fig. 2 gezeigt ist. Aus diesem Grunde sind für entsprechende Teile die Bezugsziffern gemäß Fig. 2 verwendet worden. Bei dieser Ausführungsform bildet das Kernstück des Kraft-Meßfühlers 12 ein Paar von Meßzungen 82 und 84, die in den Fig. 12 und 13 im einzelnen dargestellt sind. Die Meßzungen 82 und 84 erstrecken sich im wesentlichen parallel zueinander von einem Meßfühlerkopf-Gehäuse 86 weg parallel zur Achse des Halters 10. Beide Meßzungen sind winkelförmig ausgebildet und stehen mit ihren Winkelabschnitten 88 bzw. 90 in festem Kontakt mit Schenkeln 92 bzw. 94 eines Signalumform-Elements 96, das im einzelnen in Fig. 12 gezeigt ist. Zu diesem Zweck sind Befestigungsschrauben 98 bzw. 100 vorgesehen. Die Schenkel 92 und 94 werden von einem jochartigen Steg 102 überbrückt, der als definierte Biegestelle fungiert. Der jochförmige Steg 102 trägt einen Dehnungsmeßstreifen 104, der in den Fig. 10 und 11 dargestellt ist. Der Dehnungsmeßstreifen kann entweder aufgeklebt oder auch aufgedampft sein, und er ist über elektrische Leitungen 106 an eine elektrische Auswerteschaltung angeschlossen.

Man erkennt aus der Darstellung gemäß Fig. 9, daß bei Beaufschlagung der oberen Meßzunge 84 durch die Meßkraft $F_M$ das Signal-Umformelement 96 einer durch die winkelförmige Gestaltung der Meßzungen übersetzten Biegebeanspruchung unterworfen wird, die im Bereich des jochartigen Steges 102 eine Zugkraft hervorruft, die vom Dehnungsmeßstreifen 104 abgegriffen wird.

Zur Bereitstellung eines definierten Kraftangriffspunktes weist die obere Meßzunge 84 im Bereich ihres auskragenden Endes eine vorstehende Fläche 108 auf, die in Anlagekontakt mit dem entsprechenden Abschnitt der Brillenfassung gebracht werden soll. Da die Dicke der Meßzunge 84 lediglich im Bereich zwischen 0.2 und 0.5 mm liegt, bildet die untere Meßzunge 82 - wie aus Fig. 13 deutlicher hervorgeht - eine Einfassung für die obere Meßzunge 84. Zu diesem Zweck weist die untere Meßzunge 82 eine Ausnehmung 110 auf, die der Kontur der oberen Meßzunge 84 angepaßt ist, so daß letztere von einem um die Meßzunge 84 herumlaufenden Einfassungssteg vor unkontrollierten Belastungen geschützt ist.

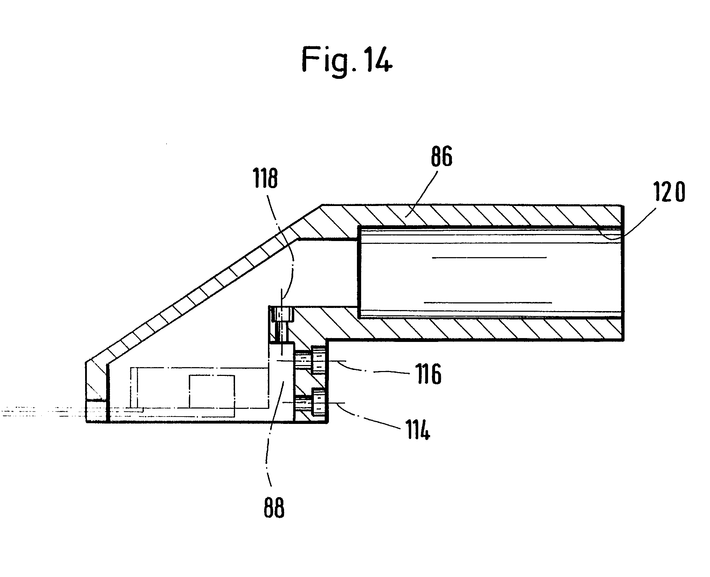

Die Befestigung der in den Fig. 12 und 13 gezeigten Montageeinheit aus Meßzungen 82 und 84 und Signal-Umform-Element 96 am Meßfühlerkopf-Gehäuse 86 geht im einzelnen aus Fig. 14 hervor. Hier ist mit strichpunktierten Linien diese Einheit dargestellt. Über ein Paar von - schematisch angedeuteten Schrauben 114 und 116, sowie über ein Schraubenpaar 118 erfolgt eine fest Einspannung des Winkelabschnitts 88 im hinteren unteren Teil des Gehäuses 86, das mit einer Aufnahmeöffnung 120 für den Funktionseingriff mit dem Halter 10 ausgestattet ist.

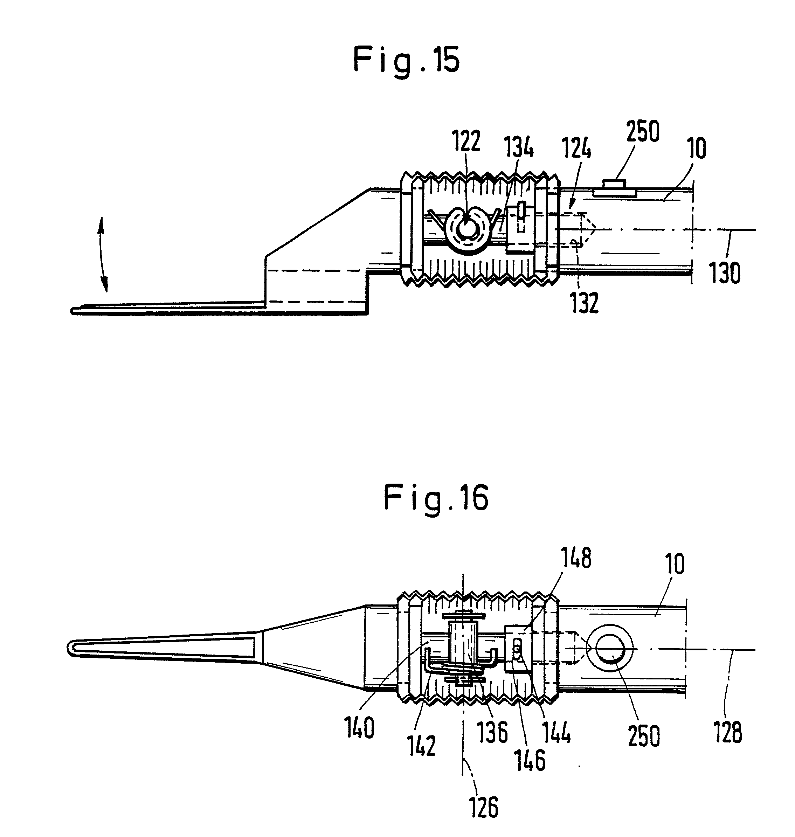

Die in den Fig. 9 bis 14 gezeigte Meßsonde 8 gibt dann exakt die Kontaktkräfte zwischen Brillenfassung und Körper 42 des Brillenträgers wieder, wenn das Gehäuse 86 des Meßfühlerkopfs frei von denjenigen Kräften gehalten ist, die über den Haltergriff auf die Kontaktfläche A aufgebracht werden. Um derartige äußere Kräfte kleinzuhalten, die das Meßergebnis verfälschen könnten, wird vorteilhafterweise zwischen Halter und Meßfühlerkopf-Gehäuse eine Gelenkeinrichtung mit mehreren Drehungs-Freiheitsgraden zwischengeschaltet. Ein Ausführungsbeispiel einer derartigen Gelenkeinrichtung ist in den Fig. 15 und 16 gezeigt. Sie umfaßt ein erstes Drehgelenk 122 und ein zweites Drehgelenk 124. Das erste Drehgelenk 122 besitzt eine Gelenkachse 126, die senkrecht auf der vertikalen Symmetrieebene 128 der Meßsonde steht. Die Gelenkachse 130 des zweiten Drehgelenks 124 fällt mit der Achse des Halters 10 zusammen. Der Halter weist zur Ausbildung des Drehgelenks 124 eine Führungsbohrung 132 auf, in die ein Gelenk-Zwischenelement 134 eingreift. Das der Bohrung 132 abgewandte Ende dieses Zwischenelements 134 bildet die erste Hälfte 136 des als Scharnier ausgebildeten ersten Drehgelenks 122 aus. Die zweite Hälfte 138 des Scharniers wird von einem Ende eines Anschlußzapfens 140 des Gehäuses 86 gebildet. Das Scharnier wird durch eine Spiralfeder 142 stabilisiert. Diese Drehbewegung des Zapfengelenks 124 wird durch einen Anschlag-und Führungsstift 144 begrenzt, der in einer Kulisse 146 eines Führungsansatzes 148 des Halters 10 gleiten kann. Die Gelenkeinrichtungen 122 und 124 werden von einem Faltenbalg 150 abgedeckt, um die beweglichen Teile vor äußeren Einflüssen zu - schützen.

Unter Zuhilfenahme dieser Gelenke 122, 124 kann der Halter 10 manuell nahezu frei von irgendwelchen Zwangskräften an jede Stelle der zu untersuchenden Kontaktflächen A herangeführt werden, wobei sich die Spitze des Meßfühlers an den Untergrund gut anschmiegt. Zur Verbesserung des Meßergebnisses kann eine zusätzliche Einrichtung vorgesehen werden, die beim Meßvorgang selbst dafür sorgt, daß die Federstabilisierung des Gelenks 122 unter dessen Entarretierung außer Funktion gesetzt wird.

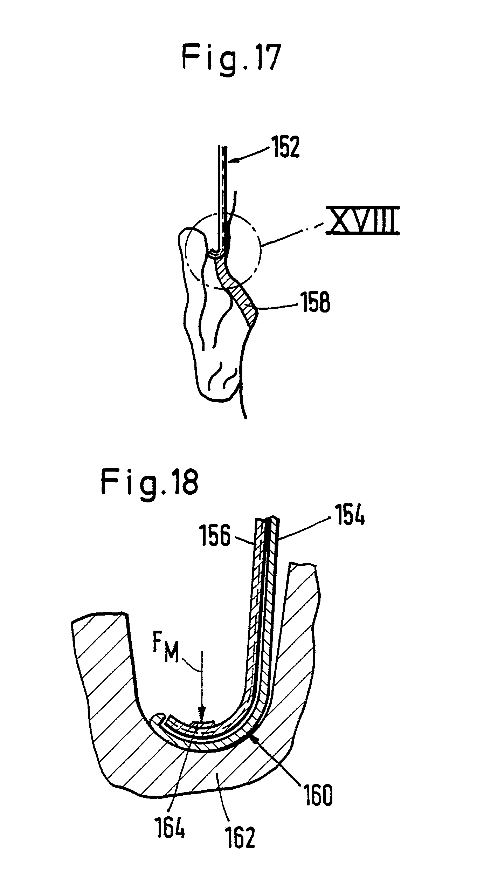

Vorstehend wurden Meßsonden beschrieben, die zumindest auf einer Seite eine ebene Auflagefläche aufweisen. Durch die zungenförmige Gestaltung eignet sich diese Formgebung selbst dafür, Kontaktkräfte in mehrfach gekrümmten Oberflächenbereichen zu messen. In den Fig. 17 bis 20 sind weitere Ausführungsbeispiele von Meßfühlern gezeigt, die sich insbesondere zur Messung der Kontaktkräfte an komplex gekrümmten Auflageflächen eignen. In Fig. 17 ist mit der Bezugsziffer 152 eine Meßfühlerspitze bezeichnet, die wiederum zwei Meßzungen 154 und 156 zur elektromechanischen Signalumwandlung aufweist. Die Meßfühlerspitze 152 ist so ausgebildet, daß sie sich insbesondere zur Messung der Kontaktkräfte zwischen Brillenfassung und dem Kopf des Brillenträgers im Bereich 158 des Ohransatzes am Schädel des Brillenträgers eignet. Zu diesem Zweck sind die äußeren Enden der Meßzungen 154 und 156 gebogen, so daß sie sich von der Form her der Kulle 160 des Ohres 162 anschmiegen Die bewegliche Meßzunge 156 weist wiederum eine Erhebung 164 auf, an der die Meßkraft $F_M$ eingeleitet werden soll. Man erkennt aus der Darstellung, daß bei Einleitung dieser Meßkraft eine Relativverschiebung zwischen den Meßzungen 154 und 156 erfolgt, die dann mittels eines Signal-Umform-Elements in ein der Kraft entsprechendes elektrisches Signal umgewandelt werden kann.

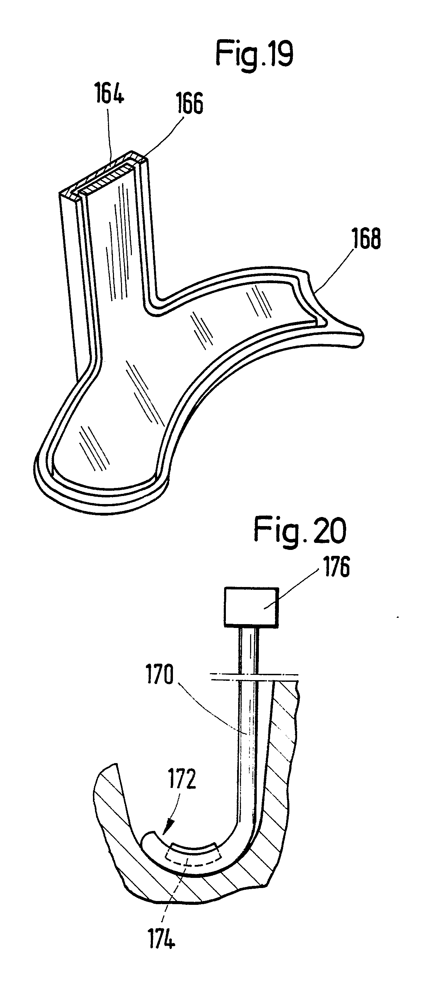

In Fig. 19 ist eine weitere Variante der Gestaltung des Spitzenabschnitts der Meßzungen gezeigt. Die Meßzungen sind mit den Bezugszeichen 164 und 166 bezeichnet. Bei dieser Ausgestaltung erfolgt nicht nur eine Anpassung der Meßzungengestaltung an die Formgebung des Ohransatzes in einer Ebene senkrecht zur Ohransatz-Linie, sondern darüber hinaus in einer Ebene, in der der Ohransatz selbst liegt. Der Spitzenabschnitt der Meßzunge 164 erhält somit die Gestalt einer Teil-Torusfläche, wobei auch bei dieser Ausgestaltung die Möglichkeit eröffnet ist, die bewegliche Meßzunge 166 mit einem Einfassungssteg 168 zu umgeben.

Die Ausgestaltung der Meßfühler-Spitze gemäß Fig. 17 bis 19 ist auch für all diejenigen Fälle möglich, in denen keine relativ zueinander beweglichen Meßzungen verwendet werden, sondern bei denen sich ein Gehäuse des Meßfühlerkopfs bis in den Spitzenbereich der Meßsonde fortsetzt. Dies ist schematisch in Fig. 20 gezeigt. Mit der Bezugsziffer 170 ist generell ein Meßfühlerkopf bezeichnet, der eine Spitze 172 trägt, die der Oberflächengestaltung des Kopfabschnitts angepaßt ist, an dem die Messung des Brillensitzes vorgenommen werden soll. In diesem Spitzenabschnitt 172 ist ein Kraftaufnehmer 174, beispielsweise in Form eines Piezoelements oder einer Kunststoffblase angeordnet, der über eine nicht dargestellte Anschlußleitung mit einem Signalumformer 176 gekoppelt ist.

Um an allen Kontaktflächen A in optimaler Weise die Kontaktkräfte messen zu können, kann ein Sortiment von Meßfühler-Zungen oder Meßfühler-Spitzenabschnitten mit unterschiedlicher Formgebung hergestellt und dem Arzt bzw. Optiker zur Verfügung gestellt, damit dieser einen Halter mit verschiedenen Meßfühlerspitzen bestücken kann.

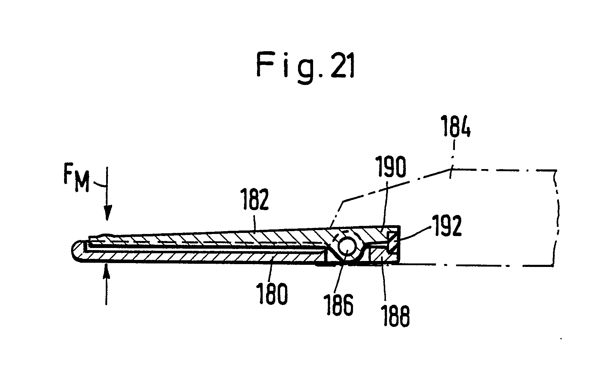

In Fig. 21 ist schematisch eine weitere Ausführungsform eines Kraft-Meßfühlers gezeigt, bei dem die Umwandlung der Eingangsgröße wiederum auf elektromechanischem Wege in ein der Meßkraft $F_M$ zugeordnetes Ausgangssignal erfolgt. Bei dieser Ausführungsform sind wiederum zwei Meßzungen 180 und 182 vorgesehen, die als Wegaufnehmer fungieren. Abweichend von der Ausführungsform gemäß den Fig. 2, 3 und 9 bis 14 sind beide Meßzungen 180 und 182 beweglich in einem Meßfühlerkopf 184 gelagert. Hierzu ist eine gemeinsame Achse 186 vorgesehen, um die die Meßzungen 180 und 182 verschwenkbar sind. Jede Meßzunge ist als zweiarmiger Hebel ausgebildet. Die dem auskragenden Ende entgegengesetzten Hebelabschnitte 188 und 190 sind fest mit einem Signal-Umform-Element 192 gekoppelt, das bei Belastung der Meßzungen 180, 182 durch die Meßkraft $F_M$ unter Zug gesetzt wird. Das Signal-Umformelement 192 kann wiederum einen Dehnungsmeßstreifen tragen oder aber als Piezoelement ausgebildet sein. Der Vorteil dieser Ausführungsform liegt darin, daß selbst dann, wenn die oben beschriebene Gelenkeinrichtung zwischen Meßfühlerkopf und Halter nicht vorgesehen ist, ausschließlich die Normalkraft im Bereich der Kontaktflächen A erfaßt und gemessen wird.

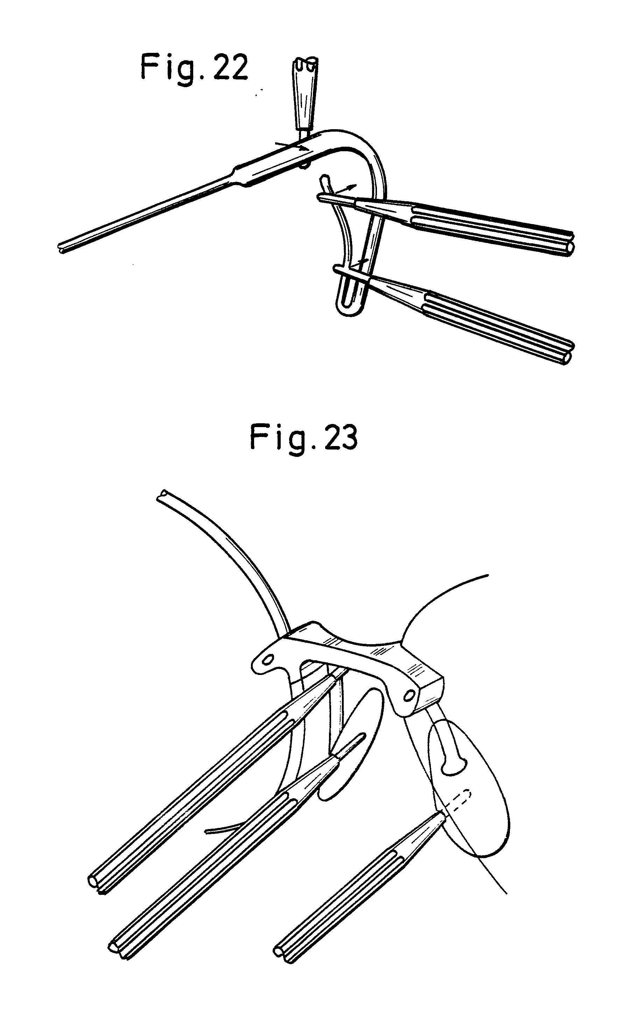

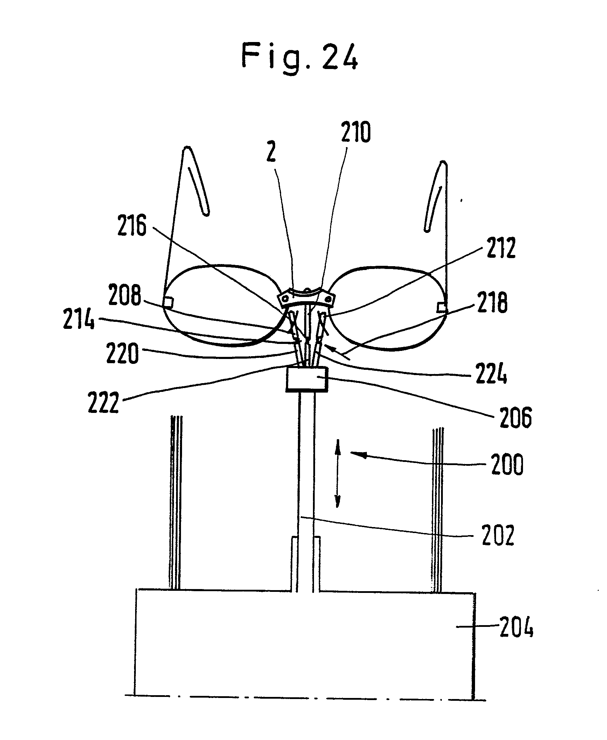

In den Fig. 22 und 23 wird gezeigt, wie eine Einfach-Meßsonde der Reihe nach Messungen an verschiedenen Kontaktflächen vornimmt. Um die Zahl der zeitlich aufeinanderfolgenden Meßvorgänge bei der Überprüfung des Sitzes der Brillenfassung zu reduzieren, dient die in Fig. 24 dargestellte Weiterbildung der Vorrichtung. Diese mit der Bezugsnummer 200 bezeichnete Meßsonde ist als Mehrfach-Meßsonde ausgebildet. Auf einem Träger 202, der auf einem bewegbaren Schlitten 204 sitzen kann, ist ein Mehrfach-Meßkopf 206 montiert, der eine Vielzahl von Druck-Meßfühlern 208 bis 212 trägt, die identisch wie die vorstehend beschriebenen Druck-bzw. Kraft-Meßfühler ausge bildet sein können. Die Kraft-Meßfühler 208 bis 212 sind vorzugsweise über Gelenke 214 bis 218 an zugeordnete Meßfühler-Köpfe 220 bis 224 angeschlossen, die vorzugsweise grob bezüglich des Mehrfach-Meßkopfs 6 ausrichtbar sind. Mit dieser Vorrichtung gelingt es, an mehreren Kontaktflächen A gleichzeitig die Kraft-bzw. Druckmessung vorzunehmen, was insbesondere im Bereich der Brillenbrücke 2 von besonderem Vorteil ist.

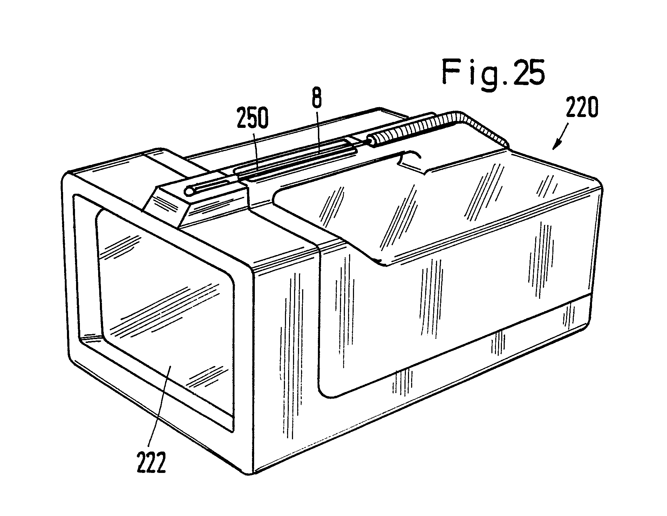

Fig. 25 zeigt eine Meßanlage, bestehend aus der Druckmeßsonde 8 und einem bevorzugterweise tragbaren Meßgerät 220, das neben der oben bereits erwähnten Auswerteschaltung für das vom Meßfühler erzeugte Signal einen Bildschirm 222 aufweist, mit der die Einzelmessungen übersichtlich in der Gesamtheit dargestellt werden können.

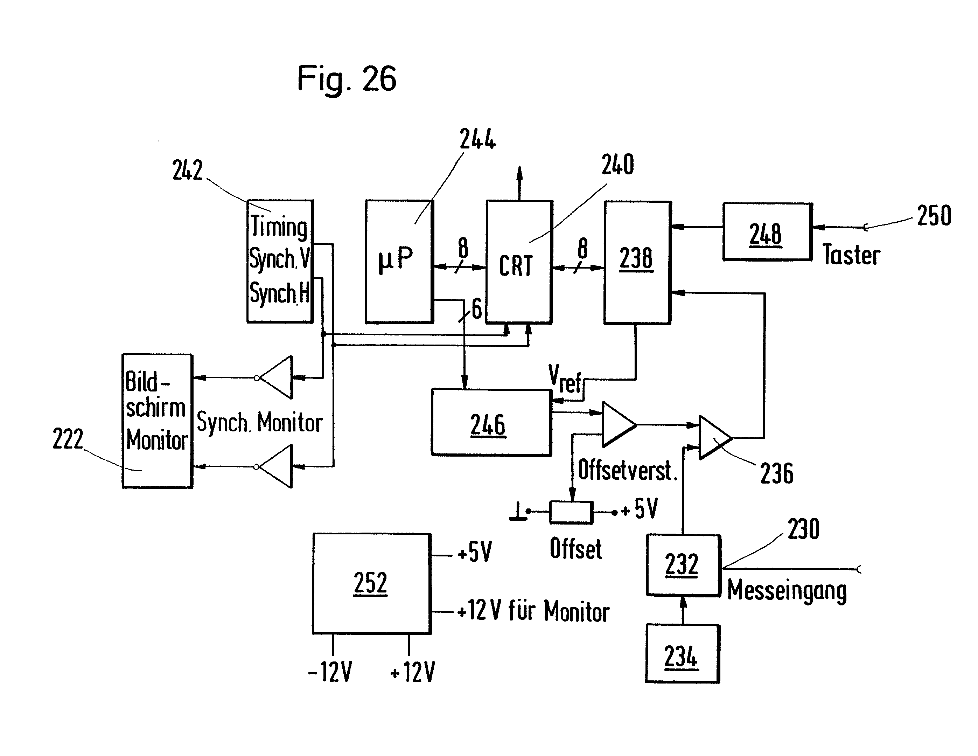

Die Meßanlage kann in zwei Betriebsarten betrieben werden, und zwar im Meß-und im Eichbetrieb. In Fig. 26 sind Bauteile der Meßanlage gemäß Fig. 25 anhand eines Blockschaltbildes dargestellt, das den Signalfluß der Meßsignale veranschaulicht. Man erkennt aus dieser Darstellung, daß das bei 230 in die Vorrichtung gegebene Meßsignal über einen Meßverstärker 232 unter Zuhilfenahme eines Oszillators 234 auf einen Operationsverstärker 236 gegeben wird. Es erfolgt eine Signalaufbereitung mit Hilfe eines A/D-Wandlers 238 zur Umformung der analogen Meßspannung in ein digitales Signal. Man erkennt ferner ein Bildverarbeitungssystem bestehend aus einem Bildschirmcontroller240 mit Zeichengenerator und einer Einheit 242 für das Timing der Vertikal-und Horizontal-Synchronisationssignale für den Bildschirm 222. Die Steuerung der Bildverarbeitung und des Bildschirmmonitors erfolgt über einen Mikroprozessor 244, der auch die Steuerung eines D/A-Wandlers 246 zur Umwandlung der digitalen Meßwerte in die analoge Korrekturspannung für eine automatische Nullabgleichung übernimmt. Die Meßanlage besitzt somit ein Regelteil zur automatischen Nacheichung der Meßfühler während des Betriebs. Ein Netzteil 252 übernimmt die Versorgung der Einheiten mit geeigneter Betriebsspannung.

Mit der Bezugsziffer 248 ist ein Startlogikblock gekennzeichnet, der die Signalverarbeitung auslöst. Dieser Startlogikblock wird von einem Taster 250 angesteuert, der sich bevorzugterweise am Halter 8 befindet, wie dies in den Figuren dargestellt ist.

Wie in den Fig. 8 und 9 schematisch angedeutet, kann die Meßfühlerspitze mit einem Kunststoffhäubchen 75 bzw. 85 abgedeckt werden, um die empfindlichen Teile der Meßsonde vor äußeren Einwirkungen abzuschirmen.

In Abwandlung der vorstehend beschriebenen Ausführungsbeispiele kann die Vorrichtung auch so ausgebildet sein, daß ein oder mehrere Kraft-Meßfühler als gesonderte Elemente an den infragekommenden Kontaktstellen zwischen Brillenfassung und Kopf des Brillenträgers angebracht und über elektrische Anschlüsse mit einer Signal-Auswerteschaltung verbunden werden. Wenn die Anschlüsse hergestellt sind, wird die Brillenfassung aufgesetzt, wonach die einzelnen Kräfte an den betreffenden Kontaktstellen nacheinander bzw. gleichzeitig bestimmt und abgerufen werden können.

In weiterer Abwandlung der gezeigten Ausführungsformen ist es auch möglich, die Gelenkeinrichtung zusätzlich zu den Gelenken mit rotatorischen Freiheitsgraden auch mit Gelenken mit translatorischen Freiheitsgraden zu versehen, um eine optimale Anschmiegung des Meßfühlers frei von Zwangskräften zu erzielen.

**Ansprüche**

1. Vorrichtung zur Bestimmung der Kräfte im Bereich der Kontaktflächen zwischen einer Brillenfassung und dem Kopf eines Brillenträgers, gekennzeichnet durch zumindest einen platten-bzw blattförmigen Kraft-Meßfühler (12; 24; 72), der an die jeweiligen Kontaktflächen (A) zwischen Fassung (1) und Kopf bringbar ist.

2. Vorrichtung nach Anspruch 1, dadurch gekennzeichnet, daß der Kraft-Meßfühler (12; 24; 72) an einem Halter (10; 22; 52; 71) angeordnet ist.

3. Vorrichtung nach Anspruch 2, dadurch gekennzeichnet, daß der Kraft-Meßfühler über ein Gelenk (122, 124; 214, 216; 218) mit vorzugsweise mehreren Freiheitsgraden am Halter (10; 22; 52; 72; 220; 222; 224) befestigt ist.

4. Vorrichtung nach Anspruch 2 oder 3, dadurch gekennzeichnet, daß der Kraft-Meßfühler einen zungenartig ausgebildeten Spitzenfortsatz (14) hat, mit dem er zwischen Brillenfassung und Kopf schiebbar ist.

5. Vorrichtung nach einem der Ansprüche 1 bis 4, dadurch gekennzeichnet, daß der Kraft-Meßfühler (12; 24; 56; 72; 84; 156; 170; 182) eine definierte Meß-Auflagefläche (36; 58; 76; 108; 164; 174) hat.

6. Vorrichtung nach einem der Ansprüche 2 bis 5, dadurch gekennzeichnet, daß der Kraft-Meßfühler (164, 166; 170, 172) an seinem auskragenden Ende eine der Kopfoberfläche im Kontaktbereich (A) zur Brillenfassung (1) angepaßte Formgebung hat.

7. Vorrichtung nach einem der Ansprüche 1 bis 6, dadurch gekennzeichnet, daß der Kraft-Meßfühler elektromechanisch arbeitet.

8. Vorrichtung nach Anspruch 7, dadurch gekennzeichnet, daß der Kraft-Meßfühler zwei an einem Meßfühlerkopf (86) befestigte, im wesentlichen parallel zueinander angeordnete Tastzungen (82, 84; 154, 156; 164, 166; 184, 180) aufweist, deren Relativverschiebung zueinander mittels eines elektrischen Meßwert-Signalumformers (104; 192) meßbar ist.

9. Vorrichtung nach Anspruch 7 oder 8, dadurch gekennzeichnet, daß die Tastzungen mit ihren der Meßstelle (A) abgewandten Enden (88, 90; 188, 190) in Funktionskontakt mit einem Meßwert-Signalumformer stehen.

10. Vorrichtung nach Anspruch 9, dadurch gekennzeichnet, daß die Tastzungen (180, 182) auf ein im Meßfühlerkopf (184) angeordnetes Piezokristallelement (192) einwirken.

11. Vorrichtung nach Anspruch 9, dadurch gekennzeichnet, daß die Tastzungen (82, 84) auf ein im Meßfühler kopf (86) angeordnetes Signalumformelement (96) wirken, das mit einer definierten Biegestelle (102) versehen ist, auf der ein Dehnungsmeßstreifen (104) aufgebracht, vorzugsweise aufgedampft ist.

12. Vorrichtung nach Anspruch 11, dadurch gekennzeichnet, daß das Signalumformelement von einem U-förmigen Bügel (96) gebildet ist, mit dessen dickeren Schenkeln (92, 94) die beiden Tastzungen (82, 84) verbunden sind und dessen dünnerer Verbindungssteg (102) die Biegestelle ausbildet.

13. Vorrichtung nach Anspruch 11 oder 12, dadurch gekennzeichnet, daß eine der Tastzungen zusammen mit dem Signalumformelement (96) fest mit dem Meßfühlerkopf (86) verbunden ist.

14. Vorrichtung nach einem der Ansprüche 8 bis 11, dadurch gekennzeichnet, daß die Tastzungen (180, 182) derart mit dem Meßwert-Signalumformer (192) verbunden sind, daß die Belastungen der beiden Tastzungen am Signalumformer addiert werden.

15. Vorrichtung nach Anspruch 13, dadurch gekennzeichnet, daß die fest mit dem Meßfühlerkopf (86) verbundene Tastzunge (82) eine von einem umlaufenden Randsteg (112) begrenzte Aufnahme-Ausnehmung (110) für die andere, bewegliche Tastzunge (84) aufweist.

16. Vorrichtung nach einem der Ansprüche 1 bis 6, dadurch gekennzeichnet, daß der Kraft-Meßfühler (24) pneumatisch arbeitet.

17. Vorrichtung nach Anspruch 16, dadurch gekennzeichnet, daß der Kraft-Meßfühler einen zungenartig auskragenden hohlen Meßfühlerkopf (28) hat, in dessen Spitze (32) eine mit Druckgas gefüllte Kunststoffblase (36) aufgenommen ist, die zur Festlegung des Meßpunkts (A) aus der Spitze vorsteht und mit einem ebenfalls im Meßfühlerkopf (24) aufgenommenen Drucksensor (38) gekoppelt ist.

18. Vorrichtung nach Anspruch 17, dadurch gekennzeichnet, daß die Kunststoffblase (36) von beiden Oberflächen der zungenartigen Spitze (32) des Meßfühlerkopfs vorsteht.

19. Vorrichtung nach Anspruch 17 oder 18, dadurch gekennzeichnet, daß die Spitze (32) des Meßfühlerkopfs (24) zumindest eine Ausnehmung (34) zur Ausbildung einer definierten vorstehenden Meßfläche der Kunststoffblase (36) aufweist.

20. Vorrichtung nach einem der Ansprüche 17 bis 19, dadurch gekennzeichnet, daß der Drucksensor (38) ein elektrisches Signal abgibt.

21. Vorrichtung nach einem der Ansprüche 1 bis 6, dadurch gekennzeichnet, daß der Kraft-Meßfühler (70) piezoelektrisch arbeitet.

22. Vorrichtung nach Anspruch 21, dadurch gekennzeichnet, daß der Kraft-Meßfühler einen zungenartig auskragenden hohlen Meßfühlerkopf (72) hat, in dessen Spitze (74) ein Piezoelement (76) gehalten ist, das an eine Spannungs-Auswerteschaltung angeschlossen ist.

23. Vorrichtung nach Anspruch 22, dadurch gekennzeichnet, daß das Piezoelement (76) auf beiden Seiten des Meßfühlerkopfs (72) durch entsprechend geformte Ausnehmungen vorsteht.

24. Vorrichtung nach Anspruch 22 oder 23, dadurch gekennzeichnet, daß das Piezoelement der Formgebung der Meßspitze entsprechend ausgebildet ist.

25. Vorrichtung nach einem der Ansprüche 1 bis 24, dadurch gekennzeichnet, daß eine Kunststoffhaube (75; 85) zur Abdeckung zumindest der Meßfühlerspitze vorgesehen ist.

26. Vorrichtung nach einem der Ansprüche 1 bis 6, dadurch gekennzeichnet, daß der Kraft-Meßfühler (50) induktiv, kapazitiv oder nach dem Hall-Effekt arbeitet.

27. Vorrichtung nach Anspruch 26, gekennzeichnet durch einen Meßfühlerkopf (54), der eine vorzugsweise mehrschichtige Meßzunge (56) trägt, in deren äußeren Schichten (64, 66) Paare von Signalgebern in Form von an eine elektrische Auswerteschaltung angeschlossenen Spulen-, Kondensator-bzw. Hall-Elementen zueinander fluchtend angeordnet sind, deren gegenseitiger Abstand unter Krafteinwirkung durch Verformung zumindest einer dazwischenliegenden Schicht (68) veränderbar ist.

28. Vorrichtung nach Anspruch 27, dadurch gekennzeichnet, daß die Meßzunge (56) aus drei Schichten aufgebaut ist, die jeweils aus Kunststoff bestehen.

29. Vorrichtung nach Anspruch 27 oder 28, dadurch gekennzeichnet, daß die Signalgeber zusammen mit den elektrischen Anschlüssen in die äußeren Schichten (64, 66) eingelassen sind, von denen zumindest eine vorzugsweise eine Erhebung (58) zur Ausbildung einer definierten Meßfläche zur Einleitung der Meßkraft ($F_M$) aufweist.

30. Vorrichtung nach einem der Ansprüche 27 bis 29, dadurch gekennzeichnet, daß die zwischen den äußeren Schichten liegende Schicht (68) von einer weichen Kunststoff-Einlage gebildet ist.

31. Vorrichtung nach einem der Ansprüche 1 bis 30, dadurch gekennzeichnet, daß mehrere Kraft-Meßfühler (208 bis 212) vorgesehen sind, die an einem vorzugsweise antreibbaren Sammelhalter (202) mit vorzugsweise ausrichtbaren Meßfühlerköpfen (220 bis 224) befestigt sind.

32. Vorrichtung nach einem der Ansprüche 8 bis 31, dadurch gekennzeichnet, daß jeder Meßfühlerkopf (86; 28; 72; 54; 208 bis 212) eine Gelenkeinrichtung (122, 214, 216, 218) an den Halter (10, 22, 52; 71; 202) angeschlossen ist.

33. Vorrichtung nach Anspruch 32, dadurch gekennzeichnet, daß die Gelenkeinrichtung (122) zumindest um eine Bewegungsachse (126) federstabilisiert ist.

34. Vorrichtung nach Anspruch 33, dadurch gekennzeichnet, daß die Federstabilisierung unter Entarretierung der Gelenkeinrichtung für den Meßvorgang aufhebbar ist.

35. Vorrichtung nach einem der Ansprüche 1 bis 34, dadurch gekennzeichnet, daß die Spitze des Meßfühlers eine Dicke unter 0.75 mm hat.

36. Vorrichtung nach einem der Ansprüche 1 bis 35, gekennzeichnet durch eine mit einer Signalauswerteschaltung verbundenen Speichervorrichtung zur Abspeicherung verschiedener nacheinander oder gleichzeitig gemessener Meßwerte und durch eine Anzeigevorrichtung (222) zur gleichzeitigen Darstellung aller abgespeicherten Meßwerte.

37. Vorrichtung nach einem der Ansprüche 2 bis 36, gekennzeichnet durch einen Taster (250), der am Halter (10; 22; 52; 72; 202) angebracht ist und mit dem eine Meßsignal-Verarbeitungseinrichtung in verschiedene Betriebsarten steuerbar ist.

# Fig.1

# Fig. 2

# Fig. 3

0 240 599

# Fig. 4

0 240 599

## Fig. 5

FM

58

56

54

250

52

50

Messzunge als
Folie ausgebildet

A

42

## Fig. 6

56

Halter oder Griff

## Fig. 7

60

64

$A_U$

62

68

66

0 240 599

Fig. 8

# Fig. 9

# Fig. 10

# Fig. 11

0 240 599

# Fig.12

# Fig.13

0 240 599

# Fig. 14

0 240 599

# Fig.15

# Fig.16

# Fig.17

# Fig.18

## Fig.19

164  166

168

## Fig.20

176

170

172

174

# Fig. 21

Fig. 22

Fig. 23

# Fig. 24

Fig.25

250  8  220

222

# Fig. 26

0 240 599